# EUROPÄISCHE PATENTSCHRIFT

(11) **EP 2 299 188 B1**
(45) Veröffentlichungstag und Bekanntmachung des Hinweises auf die Patenterteilung: **21.11.2018**
(21) Anmeldenummer: 10008882.2
(22) Anmeldetag: 26.08.2010
(51) Int. Cl.: F24D 19/08, B01D 19/00, F16L 55/07, F16K 24/00

(54) **Entlüftungsanordnung**
Ventilation assembly
Dispositif de purge d'air

(30) Priorität: 27.08.2009 DE 102009038745
(43) Veröffentlichungstag der Anmeldung: 23.03.2011
(73) Patentinhaber: WILO SE, 44263 Dortmund (DE); PAW GmbH & Co. KG, 31789 Hameln (DE)
(72) Erfinder: Meugnier, Virginie, 18220 Parassy (FR); Marko, Armin, 45500 Gien (FR); Baali, Mohamed, 18410 Argent sur Sauldre (FR); Pommerening, Marc-Oliver, 31789 Hameln (DE)
(74) Vertreter: Cohausz Hannig Borkowski Wißgott

(56) Entgegenhaltungen:
- EP-A2- 1 130 341
- DE-A1- 19 912 284
- DE-U1-202007 011 594

## Beschreibung

Die Erfindung betrifft eine Entlüftungsanordnung insbesondere für Flüssigkeit führende Rohre oder Rohrbaugruppen, wie sie z.B. in Heizungsanlagen zum Einsatz kommen.
Solche Entlüftungsanordnungen haben die Aufgabe Luft, z.B. in der geförderten Flüssigkeit als Luftblasen mittransportierte Luft aus den Rohren zu entfernen. Dies ist z.B. in Heizkreisläufen wichtig, um zu verhindern, dass durch Lufteinschlüsse Heizstränge stillgelegt werden. Dafür ist es im Stand der Technik vorgesehen, an Hochpunkten der Rohrleitungsführung automatische Entlüfterventile anzuordnen, mittels denen an den Hochpunkten gesammelte Luft automatisch aus den Rohren zur Umgebung abgeführt wird. Derartige Entlüftungsanordnungen sind beispielsweise aus den Patentanmeldungen DE202007011594 U1 und DE19912284A1 bekannt. Dabei wird es als Nachteil empfunden, dass eine Einbauposition solcher Entlüftungsanordnungen vorgegeben ist, nämlich besonders an den Stellen in einem Rohrleitungssystem, in denen sich Luft ansammeln kann, insbesondere den vorgenannten Hochpunkten.
Aufgabe der Erfindung ist es, eine Entlüftungsanordnung bereit zu stellen, mittels der eine sichere Abscheidung von Luft aus einer geförderten Flüssigkeit, insbesondere Heizungswasser erfolgen kann. Dabei soll bevorzugt eine solche Entlüftungsanordnung ortsunabhängig in einem Flüssigkeitskreislauf einsetzbar sein, also besonders auch an solchen Stellen, an denen nicht von selbst eine Luftansammlung entsteht.

Die Aufgabe wird erfindungsgemäß dadurch gelöst, dass die Entlüftungsanordnung ein Innenrohrelement umfasst, dass in ein Außenrohrelement, wie beispielsweise einen Rohrabschnitt einer Heizungsanlage, insbesondere koaxial einsetzbar / eingesetzt ist, wobei das Innenrohrelement am oberen Fluideintrittsende einen im Durchmesser erweiterten Ansatz aufweist, dessen Außendurchmesser an den Innendurchmesser des Außenrohrelementes angepaßt ist, wobei der Ansatz gedichtet, insbesondere mittels eines im Ansatz angeordneten O-Rings an die Innenwand des Außenrohrelementes anlegbar / angelegt ist und dem unteren offenen Fluidaustrittsende des Innenrohres gegenüberliegend ein Prallelement angeordnet ist, das von aus dem Innenrohrelement austretendem Fluid umströmbar / umströmt ist.

Eine solche Entlüftungsanordnung kann mit dem Innenrohrelement ein separates Bauteil bilden, das in ein Außenrohrelement eingesetzt werden kann bzw. eingesetzt ist, so dass die Zusammenfügung von Innenrohrelement und Außenrohrelement die Entlüftungsanordnung bildet. Grundsätzlich ist es auch möglich die Entlüftungsanordnung aus Innenrohr- und Außenrohrelement einstückig herzustellen, z.B. im Kunststoffspritzgussverfahren wie bei den vorgenannten Baueinheiten bzw. Rohrbaugruppen.

Eine solche Entlüftungsanordnung kann eingesetzt werden um an jeglichem Ort eines Flüssigkeit führenden Rohres Luft aus der Flüssigkeit abzuscheiden. Bevorzugt wird es an einer Stelle in einem Rohrabschnitt eingesetzt, in dem die Flüssigkeit vertikal von oben nach unten, also entgegen der Schwerkraft gefördert wird.

Bei einer einstückigen Ausbildung kann es vorgesehen sein, dass der genannte Ansatz direkt ohne weitere Dichtmittel in das Außenrohrelement übergeht. Auch das Prallelement kann dabei einstückig mit dem Innenrohr- und/oder Außenrohrelement sein.

Diese Art der Entlüftungsanordnung bewirkt, dass von oben durch das Außenrohrelement kommendes Fluid, z.B. Wasser aufgrund der Dichtigkeit zwischen dem Ansatz des Innenrohrelementes und Außenrohr in das Innenrohrelement eintritt und dieses durchströmt.

Am unteren Ende tritt das Fluid wieder aus dem Innenrohrelement aus und trifft auf das Prallelement. Diese zerstört die z.B. laminare Strömung des Fluids, so dass sich Luftblasen aus dem nach unten gerichteten Fluidstrom lösen können und aufgrund des Auftriebs in den Raumbereich zwischen dem Innenrohrelement und dem Außenrohrelement aufsteigen können.

Dieser Raumbereich kann einen Ringraum ausbilden, insbesondere dann, wenn das Innenrohrelement koaxial zentriert im Außenrohrelement einliegt. Diese Zentrierung kann am oberen Ende des Innenrohrelementes durch den Ansatz erfolgen, der bevorzugt konzentrisch mit einem größeren Durchmesser das Innenrohrelement umgeben kann.

Das Prallelement ist bevorzugt in einem Abstand zur unteren Fluidaustrittsöffnung angeordnet. Im Abstandsbereich, also dem Bereich zwischen Fluidaustrittsöffnung und Prallelement, ergibt sich so die Möglichkeit, dass das Fluid aus dem Innenrohrelement heraus, radial nach außen und dann am Prallelement vorbei strömt. Die Störung einer laminaren Strömung ergibt sich hier besonders in diesem Abstandsbereich.

Bevorzugt kann das Prallelement am Fluidaustrittsende des Innenrohrelementes über Stege, insbesondere drei Stege befestigt sein. In diesem Fall kann dann auch zumindest das Fluidaustrittsende des Innenrohrelements mittels der Stege im Außenrohrelement zentrierbar / zentriert sein. Dafür können die Stege von der zentralen Mittenachse des Innenrohrelements und/oder Außenrohrelements zumindest bereichsweise gleichmäßig beabstandet sein und mit ihrer radial nach außen weisenden Seite an der Innenwandung des Außenrohrelementes anliegen.

Ebenso besteht die Möglichkeit, das Prallelement separat vom Innenrohrelement im Außenrohrelement anzuordnen, so dass es der Fluidaustrittsöffnung des Innenrohres gegenüberliegt. Im Wesentlichen ergibt sich bei allen diesen Anordnungen ein ring- oder ringsbereichsförmiger Umströmungsbereich zwischen der Außenseite des Prallkörpers und der Innenwand des Außenrohrabschnittes.

Gerade hierfür kann bevorzugt das Prallelement als zumindest im Wesentlichen kreisscheibenförmiger Körper ausgebildet sein, der in einer Ebene senkrecht zur Strömungsrichtung des Fluids angeordnet ist. In der einen genannten Ausführung können die Stege am Außenumfang des Körpers angesetzt sein.

Bei allen möglichen Ausführungen der Entlüftungsanordnung kann das Prallelement auf seiner zur Fluidaustrittsöffnung des Innenrohrelements weisenden Oberfläche einen, insbesondere zentriert angeordneten Vorsprung aufweisen, insbesondere einen sich in Richtung zur Fluidaustrittsöffnung verjüngenden Vorsprung. Ein solcher Vorsprung kann z.B. kegelabschnittsförmig ausgebildet sein.

In einer bevorzugten Weiterbildung kann es vorgesehen sein, dass das Außenrohrelement einen an der Innenwand angeordneten Anschlag aufweist, bis zu dem das Innenrohrelement in das Außenrohrelement einschiebbar / eingeschoben ist, insbesondere wobei der im Durchmesser erweiterte Ansatz des Innenrohrelementes den Anschlag kontaktiert. Es wird so sicher gestellt, dass das Innenrohrelement nicht versehentlich zu weit in das Außenrohrelement eingeschoben wird.

Hier kann die Anordnung bevorzugt so gewählt werden, dass das obere Ende des Anschlages oberhalb einer verschließbaren Entlüftungsöffnung in der Wandung des Außenrohrelementes angeordnet ist. Dies hat den Vorteil, dass die Entlüftungsöffnung nach dem Einschieben des Innenrohrelementes immer exakt im maximal oberen Bereich des gebildeten Luft-Ringraumes angeordnet ist und aus dieser Öffnung abgelassen werden kann, z.B. manuell oder auch automatisch mittels eines automatischen Entlüfterventils.

Die Erfindung betrifft weiterhin eine Baueinheit mit einer solchen Entlüftungsanordnung, z.B. eine solarthermische Baueinheit zur Anordnung in einem Fluidkreislauf zwischen wenigstens einer Wärmequelle, insbesondere einem Sonnenkollektor und einer Wärmesenke, insbesondere einem Wärmetauscher, umfassend parallel zueinander angeordnete Vorlauf- und Rücklaufrohrabschnitte, wobei an/in einem der Rohrabschnitte eine solche Entlüftungsanordnung angeordnet ist und an/in einem der Rohrabschnitte, insbesondere am/im Rücklaufrohrabschnitt eine Pumpe zur Förderung eines Fluids anbringbar ist / angeordnet ist.

Dabei wird es als vorteilhaft empfunden, wenn die Vorlauf- und Rücklaufrohrabschnitte zumindest bereichsweise als ein einstückiges Kunststoffspritzgussteil ausgebildet sind.

Erfindungsgemäß kann es vorgesehen sein, dass eine solche Entlüftungsanordnung in dem Vorlaufrohrabschnitt der Baueinheit realisiert ist.

Es besteht hierbei auch die Möglichkeit, eine solche Entlüftungsanordnung direkt während des Spritzgussverfahrens in die einstückig ausgebildeten Vor- und Rücklaufrohrabschnitte zu integrieren, so dass ein nachträgliches Anbringen einer Entlüftungsanordnung entfallen kann. Ebenso besteht selbstverständlich die Möglichkeit, eine Entlüftungsanordnung separat vorzusehen, beispielsweise auch im Pumpengehäuse.

Derartige Baueinheiten ohne solche erfindungsgemäßen Entlüftungsanordnungen sind im Stand der Technik bekannt und werden z.B. eingesetzt zur Förderung eines Fluids und/oder zur Regelung und Überwachung eines Fluidkreislauf.

Ein solcher Fluidkreislauf findet z.B. eine mögliche Anwendung bei üblichen Solaranlagen mit Sonnenkollektor und Wärmetauscher. Die Verwendung einer solchen Baueinheit ist jedoch nicht auf dieses solarthermische Gebiet beschränkt. Solche Baueinheiten können auch zum Einsatz kommen in anderen Heizkreisen, in denen z.B. ein Heizkessel oder ein Speicher eine Wärmequelle zum Heizen des Fluid ausbildet und Heizkörper, z.B. Radiatoren oder auch Flächenheizungen eine Wärmesenke bilden, in denen die Wärme von dem Fluid abgegeben wird.

Insbesondere bei Heizanwendungen kann es dann vorgesehen sein, dass in der Baueinheit eine Pumpe angeordnet ist, insbesondere am Rücklaufrohrabschnitt.

Neben diesen Heizanwendungen findet eine Baueinheit dieser Art auch ihren möglichen Einsatz bei Kühlanwendungen. Hier kann z.B. Wärme in einem Verdampfer einer Klimaanlage aus der Raumluft aufgenommen werden. Ein solcher Verdampfer bildet in dieser Anwendung für das Fluid eine Wärmequelle. Die Wärme wird dann im Kondensator der Klimaanlage an die Umgebung angegeben und das Fluid gekühlt. In diesem Fall bildet der Kondensator eine Wärmesenke für das Fluid. In diesen Kühlanwendungen kann ebenso eine Pumpe z.B. im Rücklaufrohrabschnitt angeordnet sein. Es kann aber auch eine Pumpe in Entfall kommen, z.B. wenn das zur Förderung nötige Druckgefälle durch einen Kondensator erzeugt wird. In einer solchen Anwendung kann es auch vorgesehen sein, dass die Baueinheit den Kondensator umfasst, insbesondere im Rücklaufrohrabschnitt.

Neben den reinen Fluidleitungen können also solche Baueinheiten wenigstens eine Pumpe umfassen, die für die Förderung des Fluids verantwortlich ist sowie ggfs. weiterhin beispielsweise Ventile, Sensoren, z.B. Temperatur- oder Drucksensoren etc.

Der Vorteil einer solchen Baueinheit ist darin zu sehen, dass in dieser Einheit alle wichtigen Elemente und Aggregate zusammengefasst sind, die zum Betrieb eines Fluidkreislaufs in einer Heizanlage, z.B. Solaranlage oder auch einer Kühlanlage benötigt werden. In die grundsätzlich zwischen Wärmequelle, z.B. Sonnenkollektor und Wärmesenke, z.B. Wärmetauscher vorgesehenen Vor- und Rücklaufleitungen kann demnach eine derartige Baueinheit, die in sich bereits fertig aufgebaut und funktionsfähig ist, eingesetzt werden, so dass der Fluidkreislauf unmittelbar in Betrieb genommen werden kann.

Im Stand der Technik, wie er beispielsweise durch die Veröffentlichung EP 0 561 037 A1 gezeigt wird, ist es bekannt, solche Baueinheiten durch eine Vielzahl von Fittingen zusammenzusetzen, die Rohrabschnitte, Rohrwinkel, T-Stücke, eine Vielzahl von Flanschen etc. umfassen. Es ist die Aufgabe eines Monteurs, aus dieser Vielzahl einzelner Bauteile und Rohrfittingen eine solche Baueinheit funktionsfähig zusammenzustellen, um diese sodann als funktionsfähige Einheit am Markt anbieten zu können.

Üblicherweise ist es dabei vorgesehen, die Baueinheiten durch Metallrohrfittinge, beispielsweise aus Kupferrohr, einer Messinglegierung oder ähnlichem zu montieren. Es besteht sodann weiterhin noch die Möglichkeit, solche Baueinheiten in ein Gehäuse aus wärmedämmendem Kunststoff einzubauen, um einen zu großen Wärmeverlust durch die Vielzahl der in der Baueinheit verbauten Metallrohrfittinge zu vermeiden.

Solche bekannten Baueinheiten haben den Nachteil, dass der Montageaufwand aufgrund der Vielzahl der zu verbauenden Metallrohrfittinge hoch ist und sich hierdurch auch Fehlerquellen ergeben, beispielsweise durch fehlerhafte Orientierung der einzelnen Rohrfittinge untereinander oder auch Dichtigkeitsprobleme zwischen diesen. Darüber hinaus ergibt sich durch die Vielzahl der Metallelemente eine große metallische Oberfläche, über welche ein signifikanter Wärmeverlust stattfindet, der im Stand der Technik durch das nachträgliche Einhäusen einer hergestellten Baueinheit reduziert wird.

Wie eingangs erwähnt kann es erfindungsgemäß vorgesehen sein, dass die in der Baueinheit vorgesehenen Vorlauf- und Rücklaufrohrabschnitte zumindest bereichsweise als ein einstückiges Kunststoffspritzgussteil ausgebildet sind.

Eine kann so im einfachsten Fall ohne weitere angebaute Armaturen (Pumpen / Ventile etc.) eine Rohrbaugruppe ausgebildet werden, insbesondere die in einer solchen Baueinheit eingesetzt werden kann, die einen ersten Rohrabschnitt, insbesondere einen Vorlaufrohrabschnitt aufweist, an welchen parallel verlaufend wenigstens ein zweiter Rohrabschnitt, insbesondere wenigstens ein Rücklaufrohrabschnitt einstückig angeformt ist, und alle Rohrabschnitte ein einstückiges Kunststoffspritzgussteil ausbilden, wobei in/an einem der Rohrabschnitte eine erfindungsgemäße Entlüftungsanordnung vorgesehen ist.

Ein wesentlicher Vorteil liegt darin, dass durch die zumindest bereichsweise Ausbildung der Vorlauf- und Rücklaufrohrabschnitte als einstückiges Kunststoffspritzgussteil jegliche Montageprobleme an diesen Bauelementen vermieden werden. Es besteht keine Notwendigkeit mehr, bei einer Baueinheit gemäß der Erfindung eine Vielzahl von Rohrfittingen zusammen zu fügen, um eine entsprechende Baueinheit auszubilden. Zumindest ein Großteil der in der Baueinheit vorkommenden Rohrverbindungen können im Spritzgussverfahren als eine Rohrbaugruppe hergestellt werden, so dass hierdurch auch die Orientierung von Rohren, Flanschen und sonstigen Bauelementen vorgegeben und im Produktionsprozess konstant ist, insbesondere auch ohne dass sich Dichtigkeitsprobleme zwischen diesen einzelnen Elementen ergeben.

Darüber hinaus ergibt sich durch die Fertigung wesentlicher Rohrelemente in der Baueinheit als Rohrbaugruppe im Kunststoffspritzgussverfahren der wesentliche Vorteil, dass Wärmeverluste über diese Rohrbaugruppe deutlich geringer ausfallen als bei den üblichen metallischen Rohrfittingen.

Es besteht daher die Möglichkeit, bei Baueinheiten gemäß der Erfindung auch eine zusätzliche äußere Einhäusung der Baueinheit in Entfall kommen zu lassen, da diese aus wärmeschutztechnischen Gründen nicht zwingend notwendig ist.

In einer vorteilhaften Ausführungsform kann es vorgesehen sein, dass die Vorlauf- und Rücklaufrohrabschnitte mittels wenigstens eines mit den beiden Rohrabschnitten einstückig ausgebildeten Verbindungselementes verbunden sind. Ein solches Verbindungselement kann sich beispielsweise nur in einem unteren Bereich der beiden verbundenen Rohrabschnitte befinden. Es ergibt sich bereits hierdurch eine ausreichende Stabilität zwischen Vorlauf- und Rücklaufrohrabschnitten, wobei es bevorzugt ergänzend vorgesehen sein kann, dass ein solches Verbindungselement einen flächigen, mit Markierungen versehenen Teil aufweist.

Ein solches Verbindungselement kann demnach eine doppelte Funktion aufweisen, nämlich zum einen die mechanische Verbindung zwischen den einzelnen Rohrabschnitten sowie auch weiterhin das Bereitstellen von relevanten Informationen, wie beispielsweise eine Typenkennzeichnung, Prüfkennzeichen, Herstellerangaben, Marken oder ähnliches. Dies ist insoweit vorteilhaft, als dass solche Markierungen bereits im Spritzgussverfahren direkt in das Verbindungselement eingebracht werden können, insbesondere dann, wenn es sich um nicht variable Markierungen handelt.

In alternativen Ausführungen kann es vorgesehen sein, nicht nur im unteren Bereich ein Verbindungselement zwischen Vorlauf- und Rücklaufrohrabschnitten vorzusehen, sondern auch in einem oberen Bereich. Auch können diese beiden Rohrabschnitte über ihre gesamte Länge miteinander einstückig verbunden sein.

In einer bevorzugten Ausführungsform kann es vorgesehen sein, dass einer der Rohrabschnitte, insbesondere der Rücklaufrohrabschnitt kürzer ausgebildet ist als der anderen, wie z.B. der Vorlaufrohrabschnitt. Beispielsweise kann es vorgesehen sein, dass dieser kürzer ist als 50% der Länge des anderen Rohrabschnittes, insbesondere des Vorlaufrohrabschnittes.

Bei einer solchen Ausführungsform besteht die bevorzugte Möglichkeit, eine im Fluidkreislauf, insbesondere im Rücklauf befindliche Pumpe und/oder andere Armaturen / Aggregate / Kompressoren an diesem kürzeren Rohrabschnitt zu befestigen. Die Länge des kürzeren Rohrabschnittes kann dabei bevorzugterweise so bemessen sein, dass unter Berücksichtigung der Hinzufügung der Pumpe und/oder Armaturen / Aggregate / Kompressoren sowie weiteren stromabwärts davon liegenden Bauelementen und/oder anderen Aggregaten / Armaturen im gesamten Rohrabschnitt der Baueinheit eine Länge erreicht wird, die der gesamten Länge des anderen Rohrabschnittes entspricht. So wird erzielt, dass zwischen den Ein- und Ausgangsflanschen sowohl des gesamten Rücklaufrohrabschnittes als auch des gesamten Vorlaufrohrabschnittes die gleiche Länge gegeben ist.

In einer alternativen Ausführungsform kann es auch vorgesehen sein, dass an einen Vorlaufrohrabschnitt, an dessen unteren Bereich parallel verlaufend ein erster Rücklaufrohrabschnitt angeordnet ist durch einstückiges Angießen und dass an dessen oberem Ende ein zweiter Rücklaufrohrabschnitt durch einstückiges Gießen angeformt ist, wobei der erste und zweite Rücklaufrohrabschnitt miteinander fluchten und sich eine Lücke zwischen diesen beiden Rücklaufrohrabschnitten befindet, in die nachträglich eine Pumpe und/oder andere Armaturen / Aggregate / Kompressoren eingefügt werden kann.

Eine erfindungsgemäße Ausführung der einstückigen Rohrabschnitte kann also einen Vorlaufrohrabschnitt und wenigstens einen damit einstückigen ggfs. zwei axial beabstandete Rücklaufrohrabschnitte aufweisen.

Dabei kann es jeweils vorgesehen sein, dass der erste/untere und zweite/obere Rücklaufrohrabschnitt mit dem Vorlaufrohrabschnitt auf die Art und Weise einstückig verbunden ist, wie es eingangs beschrieben wurde, nämlich beispielsweise durch ein Verbindungselement, welches insbesondere ebenso flächige, mit Markierungen versehene Bereiche aufweisen kann. Diese Anordnung kann ebenso gewählt sein, wenn die Vorlauf- bzw. Rücklauffunktion der beiden Rohrabschnitte vertauscht ist.

In weiterhin bevorzugter Ausgestaltung, die mit sämtlichen zuvor genannten Ausführungen kombinierbar ist, kann es ergänzend vorgesehen sein, dass zumindest im unteren Bereich wenigstens eines der beiden Rohrabschnitte Anschlussverbinder zum Anschluss von weiteren Komponenten aufweist, die einstückig an die jeweiligen Rohrabschnitte angegossen sind. An solche Anschlussverbinder können beispielsweise Sensoren, wie Temperatur- oder Drucksensoren angeschlossen werden oder auch sonstige benötigte Armaturen oder Befüllungsvorrichtungen.

Durch das einstückige Angießen dafür vorgesehener Verbinder werden jegliche Dichtigkeitsprobleme vermieden. Darüber hinaus besteht immer die exakt gewünschte Orientierung der jeweiligen Anschlussverbinder zu dem jeweiligen Rohrabschnitt, d.h. dem jeweiligen Vorlauf- oder auch Rücklaufrohrabschnitt. Solche entsprechenden Anschlussverbinder können dabei nicht nur im unteren Bereich, sondern gegebenenfalls auch im oberen Bereich sowie auch in Zwischenbereiche vorgesehen sein.

Ebenso besteht die Möglichkeit, dass zumindest in einem unteren Ende wenigstens eines der Rohrabschnitte Flansche einstückig angegossen sind, die in bevorzugter Weise dazu dienen, eine sich anschließende Vor- und oder Rücklaufverrohrung durch eine gesteckte Verbindung zu realisieren. Es besteht demnach bei einer erfindungsgemäßen Baueinheit die Möglichkeit, diese auf besonders einfache Art und Weise nachträglich in eine bestehende Vorlauf- und Rücklaufverrohrung einzufügen, da aufgrund von Steckverbindungen jegliche Rotationen von eventuellen Flanschbereichen für eine Verbindung unnötig werden.

In bevorzugter Ausführung kann es vorgesehen sein, dass der Kragen eines angegossenen Flansches wenigstens eine Ausnehmung aufweist, durch die senkrecht zur Längserstreckung eines Rohrabschnittes wenigstens ein Sicherungselement in den Flansch einsteckbar bzw. eingesteckt ist zur Sicherung einer in den Flansch eingesteckten weiteren Verrohrung. Bei einer solchen Verrohrung kann es sich z.B. um Messing-Anschlußadapter handeln.

So wird auf diese Art und Weise sichergestellt, dass nach Herstellen einer gedichteten Steckverbindung zwischen einem solchen Flansch und einer sich anschließenden Verrohrung sich diese Steckverbindung nicht versehentlich löst, beispielsweise durch Bewegung der Baueinheit oder auch aufgrund von thermischen Einflüssen und damit einhergehenden Ausdehnungen.

Um eine mechanisch stabile Ausführung der erfindungsgemäßen Baueinheit zu realisieren, kann es weiterhin vorgesehen sein, dass die einstückig ausgebildeten Vorlauf- und Rücklaufrohrabschnitte an einem Trägerprofil befestigt sind. Hier kann es beispielsweise vorgesehen sein, dass das Trägerprofil aus Metall oder einem Verbundwerkstoff ausgebildet ist. Es kann sich beispielsweise bei dem Trägerprofil um ein L- oder U-Profil handeln mit wenigstens einem horizontal ausgerichteten Schenkel, wobei in der Schenkelfläche, zumindest des unteren Schenkels, Ausnehmungen angeordnet sind, durch die jeweils eine Vor- und Rücklaufverrohrung hindurchreicht, die an die einstückig ausgebildeten Vor- und Rücklaufabschnitte angeschlossen ist. Dabei kann beispielsweise eine solche Ausnehmung eine Verdrehsicherung zur Verhinderung der Rotation der Verrohrung aufweisen, insbesondere dadurch, dass von der Schenkelfläche eine Lasche aufsteht, an welcher ein Rohrbereich einer sich anschließenden Verrohrung, wie z.B. Messing-Adapter anliegt.

Ein Ausführungsbeispiel der Erfindung ist in den nachfolgenden Figuren dargestellt. Es zeigen:
- Figur 1: Ein Innenrohrelement einer Entlüftungsanordnung
- Figur 2: die vorbeschriebene Rohrbaugruppe, bei der der Vorlaufrohrabschnitt das Außenrohrelement bildet
- Figur 3: die im Vorlaufrohrabschnitt realisierte Entlüftungsanordnung.
- Figur 4: die einstückig hergestellten Vorlauf- und Rücklaufabschnitte bzw. die Rohrbaugruppe einer erfindungsgemäßen Baueinheit in Vorderansicht
- Figur 5: Vorlauf- und Rücklaufabschnitte bzw. Rohrbaugruppe in Rückansicht
- Figur 6: eine komplett aufgebaute Baueinheit

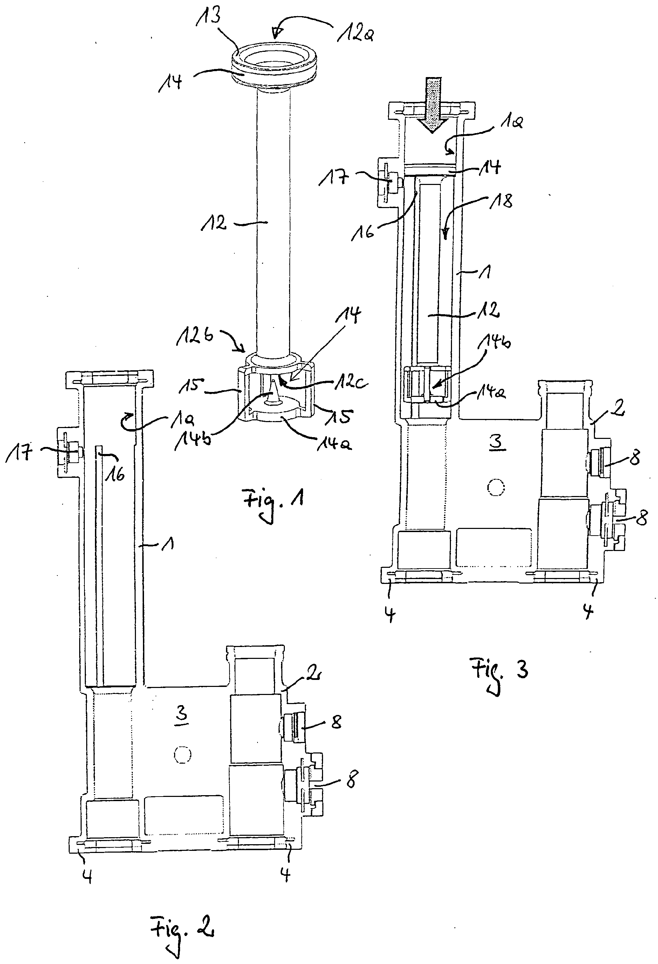

Die Figuren 1, 2 und 3 zeigen, wie beispielhaft in einer Rohrbaugruppe der später noch näher beschriebenen Art zusätzlich eine erfindungsgemäße Entlüftungsanordnung realisiert ist. Die Erfindung ist hierbei nicht auf die Anordnung der Entlüftungsanordnung in einer solchen Rohrbaugruppe beschränkt. Grundsätzlich kann die Erfindung an/in jeder Art von Rohr realisiert sein. Die Anwendung soll die Erfindung lediglich anhand einer bevorzugten Ausführung beschreiben.
Die Entlüftungsanordnung der erfindungsgemäßen Art umfasst dabei ein separat ausgebildetes Innenrohrelement 12, welches die Figur 1 zeigt. Dieses Innenrohrelement 12 ist im Rohrdurchmesser kleiner als der Innendurchmesser des Außenrohrelementes 1, das hier durch den Vorlaufrohrabschnitt 1 gemäß Figur 2 gebildet wird. Hier kann der Durchmesser des Vorlaufrohrabschnittes 1 vergrößert ausgebildet sein gegenüber üblichen Durchmessern, um das Innenrohrelement 12 gut aufnehmen zu können, ohne eine effektive Querschnittsverringerung zu erzeugen.
Das Innenrohrelement 12 hat einen oberen Ansatz 13, der einen größeren Durchmesser aufweist als der Außendurchmesser des Innenrohrelementes zwischen dessen oberen und unteren Endbereichen. Dieser Außendurchmesser ist an den Innendurchmesser des Außenrohrelementes 1, also in diesem Beispiel des Vorlaufrohrabschnittes 1 angepasst, so dass der Ansatz in dieses eingesetzt werden kann und gedichtet an dessen Innenwand anliegt. Dafür kann der Ansatz einen O-Ring 14 aufweisen, welcher in einer Ringnut des Ansatzes einliegt und diesen umgibt. Der Ansatz bildet hier einen Fluideintritt 12a in das Innenrohrelement 12.
Das untere Fluidaustrittsende 12b des Innenrohrelementes 12 weist ein Prallelement 14 auf mit einem im Wesentlichen scheibenförmigen, insbesondere kreisscheibenförmigen Körper 14a auf, der einen mittig zentrierten Vorsprung 14b trägt auf seiner zur Fluidaustrittsöffnung 12c weisen Seite. Der Prallkörper ist hier über 3 Stege 15 in einem Abstand zum unteren Ende des Innenrohelementes 12 an diesem befestigt.
Die Figur 3 zeigt den Zustand, wenn das Innenrohrelement 12 in das Aussenrohrelement 1 eingeführt ist. Von oben kommendes Wasser tritt in das Innerohrelement 12 ein und unten wieder aus, wobei es in Strömungsrichtung auf das Prallelement 14 stößt, radial nach außen weicht und das Prallelement 14 umströmt, welches in seiner Querschnittsfläche kleiner ist als der innere frei Querschnitt des Vorlausrohrabschnittes 1. Nach Umströmen kann also das Wasser im Aussenrohrelement 1, insbesondere dem Vorlaufrohrabschnitt 1 weiter nach unten fließen.
Im Bereich zwischen Prallelement 14 und Fluidaustrittsöffnung 12c wird die laminare Strömung des Wasser gestört, so dass mitgeführte Luftblasen vor dem Prallelement 14 aufgrund des Auftriebs eine Richtungsumkehr erfahren und in den Ringraum 18 zwischen Innenrohrelement 12 und Außenrohrelement 1 gelangen und sich sammeln.
Am oberen Ende des Ringraumes 18 ist eine Ablassöffnung 17 angeordnet, durch die angesammelte Luft abgelassen werden kann. Um die optimale Positionierung des Innenrohrelementes 12 im Aussenrohrelement n1, z.B. einem Vorlaufrohrabschnitt 1 zu erzielen weist dieses auf der Innenwandung 1a einen Anschlag 16 auf bis zu dem das Innenrohrelement 12 in das Aussenrohrelement 1 eingeschoben werden kann. Dieser Anschlag ist bevorzugt während des Spritzgießvorganges der Rohrbaugruppe mit hergestellt.

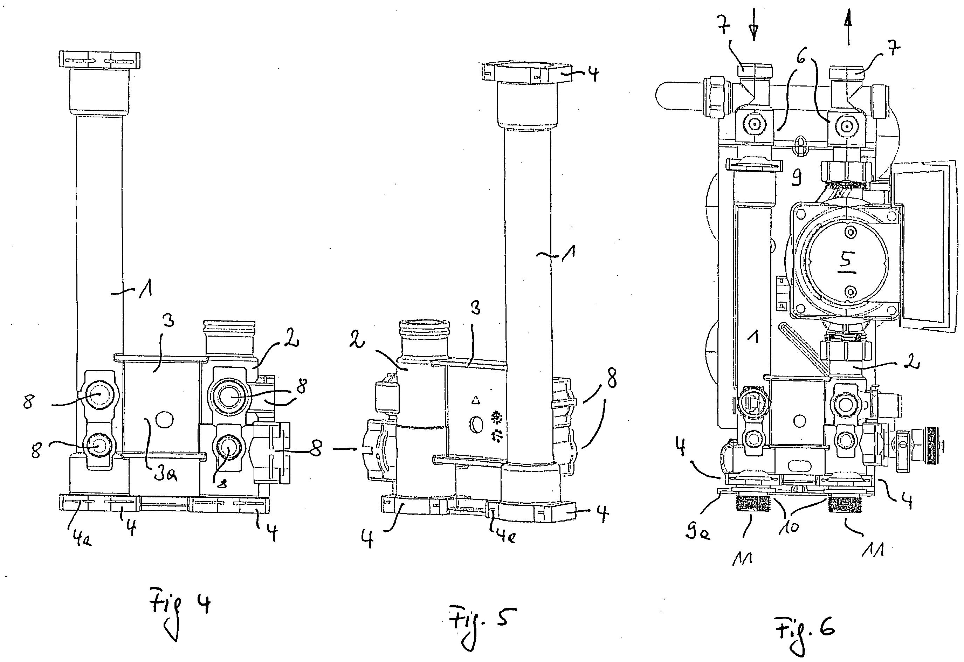

Die Figuren 4 und 5 zeigen den wesentlichen erfindungsgemäßen Anteil einer erfindungsgemäßen gesamten Baueinheit gemäß der Figur 6. Zur Verdeutlichung des Aufbaus der Baueinheit ist die erfindungsgemäß vorgesehene Entlüftungsanordnung im Rohrabschnitt 1 nicht gezeigt.

Erkennbar ist es hier, dass der Vorlaufrohrabschnitt 1 und der Rücklaufrohrabschnitt 2 als ein einstückig ausgebildetes Bauteil ausgeführt sind und somit eine einbaufertige Rohrbaugruppe ausbilden. Die beiden Vorlauf- und Rücklaufrohrabschnitte 1 und 2 sind im Spritzgussverfahren aus Kunststoff ausgebildet und somit in ein- und demselben Herstellungsschritt produziert worden.

Die Figuren 4 und 5 zeigen dabei, dass Vorlaufabschnitt 1 und Rücklaufrohrabschnitt 2 parallel zueinander verlaufen und bei dieser hier dargestellten Ausführung in einem unteren Bereich durch ein Verbindungselement 3 verbunden sind, welches ebenso im Spritzgussverfahren zusammen mit den beiden Rohrabschnitten einstückig hergestellt wird. Dieses Verbindungselement 3 weist einen flächigen vorderseitigen und/oder rückseitigen Bereich 3a auf, der gemäß der hier gezeigten Ausführung zusätzliche Informationen tragen kann, wie beispielsweise eine Produktbezeichnung oder, wie es die Figur 5 zeigt, im insbesondere rückseitigen Bereich, auch Prüfkennzeichnungen aufweisen kann.

Die Figuren zeigen, dass der Rücklaufrohrabschnitt 2 im unteren Bereich in derselben Ebene endet wie der Vorlaufrohrabschnitt 1, d.h. die beiden nach unten weisenden Flansche 4 haben eine gemeinsame Flanschebene. Ausgehend von dieser Ebene, in der sich die Flansche 4 befinden, ist die aufstehende Höhe des Rücklaufrohrabschnittes 2 kürzer als die des Vorlaufabschnittes 1. Hierdurch verbleibt oberhalb des Rücklaufrohrabschnittes 2 ein Einbaubereich, in dem eine Pumpe 5 und/oder andere Armaturen / Aggregate vorgesehen sein kann, wie es in der Figur 3 die insgesamt aufgebaute Baueinheit zeigt. Es kann sodann realisiert werden, dass die gesamte Baueinheit, wie sie die Figur 6 zeigt, nach Anfügung weiterer Rohrelemente 6 an den Vorlaufrohrabschnitt 1 bzw. an die Pumpe 5 im oberen Bereich ebenfalls wiederum in einer Ebene liegende Flansche 7 aufweist. Die Baueinheit hat damit im Vorlauf- und Rücklaufbereich dieselbe Länge.

Die Figuren 4 und 5 zeigen weiterhin, dass hier die Möglichkeit vorgesehen ist, insbesondere im unteren Bereich nahe des Verbindungselementes 3 an den Vorlaufrohrabschnitt 1 bzw. Rücklaufrohrabschnitt 2 noch weitere Verbindungselemente 8 unmittelbar im Herstellungsprozess einstückig anzuformen. Diese Verbindungselemente 8, die jeweils wiederum Flanschelemente und/oder Rohrstücke aufweisen können, können dazu dienen, unterschiedlichste Armaturen zusätzlich an dem einstückigen Bauteil des Vorlauf- und Rücklaufrohrabschnittes anzusetzen, wie beispielsweise Temperatursensoren, Drucksensoren oder ähnliches.

Die Figur 6 zeigt in einer Übersichtsdarstellung die gesamte erfindungsgemäße Baueinheit, die die einstückige Rohrbaugruppe aus Vorlauf- und Rücklaufrohrabschnitt umfasst.

Hier ist es weiterhin vorgesehen, dass die beiden einstückig ausgebildeten Vor- und Rücklaufrohrabschnitte mit einem Trägerprofil 9 verbunden sind, um eine ausreichende Stabilität der Gesamtanordnung zu erzielen. Das Trägerprofil 9 verläuft mit Bezug auf die Figur 6 in einer Ebene hinter den beiden Vor- und Rücklaufrohrabschnitten 1 und 2 und kann beispielsweise eine L- oder auch U-Profilform aufweisen, bei dem zumindest ein unterer Schenkel 9a rechtwinklig zur Längserstreckung der Rohrabschnitte 1/2 verläuft und Ausnehmungen 10 aufweisen kann, die eine fortführende Verrohrung 11 aufnehmen.

Hierbei kann es vorgesehen sein, dass die fortführende Verrohrung 11 sowohl in der Verrohrung nach unten als auch nach oben eine gesteckte Verbindung mit den unteren Flanschelementen 4 und/oder oberen Flanschelementen 7 der Vor- und Rücklaufrohrabschnitte ausbildet. Diese Verrohrung 11 kann z.B. durch AnschlußAdapter aus Messing ausgeführt sein.

Zumindest die unteren Flansche 4 sowie die darin aufgenommenen Enden der fortführenden Verrohrung 11 können entsprechende, zueinander passende Flanschflächen aufweisen, die gedichtet miteinander verbindbar sind, wobei es hier in dieser Ausführung vorgesehen ist, dass die Flanschelemente 4 eine Ausnehmung 4a aufweisen, durch die ein Sicherungselement, beispielsweise ein Sicherungsstift oder Sicherungsbügel, senkrecht zur Längserstreckung der Verrohrung eingesteckt werden kann. Wenn eine fortführende Verrohrung 11 mit seinem Flanschteil in den Flansch 4 eines Vor- bzw. Rücklaufrohrabschnittes eingesteckt ist, kann demnach ein solches Sicherungselement einen Kragenbereich des korrespondierenden Flanschteils der fortführenden Verrohrung 11 hintergreifen und so diese fortführende Verrohrung 11 sichern.

Eine solche Art der Verbindung ist nicht nur im unteren Bereich der beiden einstückig miteinander ausgebildeten Vor- und Rücklaufrohrabschnitte möglich, sondern ebenso in einem oberen Bereich, insbesondere im oberen Bereich des Vorlaufrohrabschnittes 1, der gemäß Figuren 4 und 5 einen ebenso gebildeten Flansch 4 aufweist.

In dieser Ausführung wie sie die Figur 6 zeigt kann es weiterhin vorgesehen sein, dass die beiden oberen Rohrenden 6, die ebenso einen Vorlauf- und Rücklaufrohrteil umfassen und die sich oben an die Pumpe 5 bzw. weiteren Armaturen im Rücklauf und oben an den Vorlaufrohrabschnitt 1 anschließen ebenso einstückig als Kunststoffspritzgussteil ausgebildet sind, insbesondere mit denselben Vorteilen wie bei den Rohrabschnitte 1 und 2. Hier kann eine Schraubverbindung zur Pumpe 5 und eine Steckverbindung zum Vorlaufrohrabschnitt 1 vorgesehen sein, wie sie zuvor beschrieben wurde. Ebenso besteht die - hier jedoch nicht gezeigte Möglichkeit - die Rohrabschnitte 6 einstückig mit dem Vorlaufrohrabschnitt 1 zu verbinden, so dass sich ein mit einer Lücke versehener oberer und unterer Rücklaufrohrabschnitt 2/6 ergibt, in die die Pumpe 5 und/oder anderen Armaturen eingefügt werden können.

Die Figur 6 zeigt deutlich, dass eine erfindungsgemäße Baueinheit den besonderen Vorteil aufweist, dass ein ganz wesentlicher Anteil der Verrohrung innerhalb der erfindungsgemäßen Baueinheit ein einziges Bauelement darstellt, nämlich ein einstückiges Element, umfassend Vorlaufrohrabschnitt 1 und wenigstens einen Rücklaufrohrabschnitt 2 mit wenigstens einem Verbindungselement zwischen diesen, so dass eine Vielzahl von bislang bestehenden Problemen bei der Montage bzw. Herstellung entfallen, wie beispielsweise Dichtigkeitsprobleme, richtige Orientierung der einzelnen Rohrfittinge etc. Darüber hinaus ergibt sich ein wesentlicher wärmetechnischer Vorteil durch die Kunststoffausführung signifikanter Rohranteile in einer erfindungsgemäßen Baueinheit, da durch die einstückig aus Kunststoff im Spritzgussverfahren ausgebildeten Vorlauf- und Rücklaufrohrabschnitte ein geringerer Wärmeverlust entsteht als dies bei üblichen Metallverrohrungen der Fall ist.

## Patentansprüche

1. Entlüftungsanordnung, die ein Außenrohrelement (1) und ein Innenrohrelement (12) umfasst, dass in das Außenrohrelement (1), eingesetzt ist, wobei das Innenrohrelement (12) am oberen Fluideintrittsende (12a) einen im Durchmesser erweiterten Ansatz (13) aufweist, dessen Außendurchmesser an den Innendurchmesser des Außenrohrelementes (1) angepaßt ist, wobei der Ansatz (13) gedichtet, insbesondere mittels eines im Ansatz (13) angeordneten O-Rings (14), an die Innenwand (1a) des Außenrohrelementes (1) anlegbar oder angelegt ist und dem unteren offenen Fluidaustrittsende (12b) des Innenrohres (12) gegenüberliegend ein Prallelement (14) angeordnet ist, das von aus dem Innenrohrelement (12) austretendem Fluid umströmbar oder umströmt ist, **dadurch gekennzeichnet, dass** das Prallelement (14) in einem Abstand zur unteren Fluidaustrittsöffnung (12c) am Fluidaustrittsende (12b) des Innenrohrelementes (12) über Stege (15)befestigt ist wobei zumindest das Fluidaustrittsende (12b) des Innenrohrelements (12) mittels der Stege (15) im Außenrohrelement (1) zentriert ist.

2. Entlüftungsanordnung nach Anspruch 1, **dadurch gekennzeichnet, dass** das Prallelement (14) als kreisscheibenförmiger Körper (14a) ausgebildet ist, der in einer Ebene senkrecht zur Strömungsrichtung des Fluids angeordnet ist, insbesondere wobei die Stege (15) am Außenumfang des Körpers (14a) angesetzt sind.

3. Entlüftungsanordnung nach einem der vorherigen Ansprüche, **dadurch gekennzeichnet, dass** das Prallelement (14) auf seiner zur Fluidausstrittsöffnung (12c) des Innenrohres (12) weisenden Oberfläche einen sich in Richtung zur Fluidaustrittsöffnung verjüngenden Vorsprung (14b) aufweist.

4. Entlüftungsanordnung nach einem der vorherigen Ansprüche, **dadurch gekennzeichnet, dass** das Außenrohrelement (1) einen an der Innenwand (1a) angeordneten Anschlag (16) aufweist, bis zu dem das Innenrohrelement (12) in das Außenrohrelement (1) einschiebbar ist, wobei der im Durchmesser erweiterte Ansatz (13) des Innenrohrelementes (12) den Anschlag (16) kontaktiert.

5. Entlüftungsanordnung nach Anspruch 4, **dadurch gekennzeichnet, dass** das obere Ende des Anschlages (16) oberhalb einer verschließbaren Entlüftungsöffnung (17) in der Wandung des Außenrohrelementes (1) angeordnet ist.

6. Baueinheit mit einer Entlüftungsanordnung nach einem der vorherigen Ansprüche, **dadurch gekennzeichnet, dass** die Baueinheit vorgesehen ist zur Anordnung in einem Fluidkreislauf zwischen wenigstens einer Wärmequelle und einer Wärmesenkeund parallel zueinander angeordnete Vorlauf- und Rücklaufrohrabschnitte (1, 2) umfasst, wobei einer der Rohrabschnitte, insbesondere der Vorlaufrohrabschnitt, das Außenrohrelement (1) der Entlüftungsanordnung ausbildet und an oder in einem der Rohrabschnitte (2) eine Pumpe (5) zur Förderung eines Fluids anbringbar ist oder angeordnet ist, wobei die Vorlauf- und Rücklaufrohrabschnitte (1, 2) zumindest bereichsweise als ein einstückiges Kunststoffspritzgussteil ausgebildet sind.

7. Baueinheit nach Anspruch 6, **dadurch gekennzeichnet, dass** die Vorlauf- und Rücklaufrohrabschnitte (1, 2)mittels eines mit beiden Rohrabschnitten (1,2] einstückig ausgebildeten Verbindungselementes (3) verbunden sind.

8. Baueinheit nach Anspruch 7, **dadurch gekennzeichnet, dass** das Verbindungselement (3) einen flächigen mit Markierungen versehenen Teil aufweist.

9. Baueinheit nach einem der vorherigen Ansprüche 6-8 **dadurch gekennzeichnet, dass** der Rücklaufrohrabschnitt (2), kürzer ausgebildet ist als der Vorlaufrohrabschnitt (1.

10. Baueinheit nach einem der vorherigen Ansprüche 6 bis 9, **dadurch gekennzeichnet, dass** das zumindest im unteren Bereich wenigstens eines der beiden Rohrabschnitte (1, 2) Anschlußverbinder (4) zum Anschluß weiterer Komponenten einstückig angegossen sind.

11. Baueinheit nach einem der vorherigen Ansprüche 6 bis 10**, dadurch gekennzeichnet, dass** das zumindest an einem unteren Ende wenigstens eines der Rohrabschnitte (1,2) Flansche (4) zur gesteckten Aufnahme von weiterer Vor- und/oder Rücklaufverrohrung und/oder Messing-Adaptern einstückig angegossen sind.

12. Baueinheit nach Anspruch 11, **dadurch gekennzeichnet, dass** der Kragen eines angegossenen Flansches wenigstens eine Ausnehmung (4a) aufweist, durch die senkrecht zur Längserstreckung eines Rohrabschnitts (1, 2) wenigstens ein Sicherungselement in den Flansch (4) eingesteckt ist zur Sicherung einer in den Flansch (4) eingesteckten weiteren Verrohrung.

13. Baueinheit nach einem der vorherigen Ansprüche 6 bis 12, **dadurch gekennzeichnet, dass** die einstückig ausgebildeten Vorlauf- und Rücklaufrohrabschnitte (1, 2) an einem Trägerprofil (9) befestigt sind.

## Claims

1. Ventilation assembly which comprises an external tubular element (1) and an internal tubular element (12) which is inserted in the external tubular element (1), wherein the internal tubular element (12) at the upper fluid entry end (12a) has an appendage (13) that is widened in terms of the diameter, the external diameter of said appendage (13) being adapted to the internal diameter of the external tubular element (1), wherein the appendage (13) in a sealed manner, in particular by means of an O-ring (14) that is disposed in the appendage (13), is capable of being brought to bear or bears on the internal wall (1a) of the external tubular element (1), and an impact element (14) is disposed so as to be opposite the lower open fluid exit end (12b) of the internal tube (12), the fluid exiting from the internal tubular element (12) being capable of flowing or flowing about said impact element (14), **characterized in that** the impact element (14) by way of webs (15) is fastened to the fluid exit end (12b) of the internal tubular element (12) so as to be spaced apart from the lower fluid exit opening (12c), wherein at least the fluid exit end (12b) of the internal tubular element (12) by means of the webs (15) is centred in the external tubular element (1).

2. Ventilation assembly according to Claim 1, **characterized in that** the impact element (14) is configured as a circular-disc-shaped member (14a) which is disposed in a plane that is perpendicular to the flow direction of the fluid, in particular wherein the webs (15) are attached to the external circumference of the member (14a).

3. Ventilation assembly according to one of the preceding claims, **characterized in that** the impact element (14) on that surface thereof that points towards the fluid exit opening (12c) of the internal tube (12) has a protrusion (14b) that tapers off in the direction towards the fluid exit opening.

4. Ventilation assembly according to one of the preceding claims, **characterized in that** the external tubular element (1) has a detent (16) that is disposed on the internal wall (1a), the internal tubular element (12) being capable of being push-fitted into the external tubular element (1) up to said- detent (16), wherein the appendage (13) of the internal tube element (12) that is widened in the diameter contacts the detent (16).

5. Ventilation assembly according to Claim 4, **characterized in that** the upper end of the detent (16) is disposed above a closable ventilation opening (17) in the wall of the external tubular element (1).

6. Functional unit having a ventilation assembly according to one of the preceding claims, **characterized in that** the functional unit is provided for disposal in a fluid circuit between at least one heat source and one heat sink, and comprises advancing-flow and returning-flow tubular portions (1, 2) that are disposed so as to be mutually parallel, wherein the external tubular element (1) of the ventilation assembly is configured by one of the tubular portions, in particular the advancing-flow tubular portion, and a pump (5) for conveying a fluid is attachable to or disposed in one of the tubular portions (2), wherein the advancing-flow and returning-flow tubular portions (1, 2) at least in regions are configured as an integral plastic injection-moulded part.

7. Functional unit according to Claim 6, **characterized in that** the advancing-flow and returning-flow tubular portions (1, 2) are connected by means of a connection element (3) that is configured so as to be integral to both tubular portions (1, 2).

8. Functional unit according to Claim 7, **characterized in that** the connection element (3) has a planar part that is provided with markings.

9. Functional unit according to one of preceding Claims 6 to 8, **characterized in that** the returning-flow tubular portion (2) is configured so as to be shorter than the advancing-flow tubular portion (1).

10. Functional unit according to one of the preceding claims 6 to 9, **characterized in that** connectors (4) for connecting further components are integrally moulded to at least the lower region of at least one of the two tubular portions (1, 2).

11. Functional unit according to one of the preceding claims 6 to 10, **characterized in that** flanges (4) for receiving in a plug-fitting manner further advancing-flow and/or returning-flow tubing and/or brass adapters are integrally moulded to at least a lower end of at least one of the tubular portions (1, 2).

12. Functional unit according to Claim 11, **characterized in that** the collar of a flange moulded thereto has at least one clearance (4a) by way of which at least one securing element is plug-fitted into the flange (4) in a manner perpendicular to the longitudinal extent of a tubular portion (1, 2) in order for a further tubing that is plug-fitted into the flange (4) to be secured.

13. Functional unit according to one of the preceding claims 6 to 12, **characterized in that** the integrally configured advancing-flow and returning-flow tubular portions (1, 2) are fastened to a support profile (9).

## Revendications

1. Agencement de désaérage, comprenant un élément tubulaire extérieur (1) et un élément tubulaire intérieur (12) qui est inséré dans l'élément tubulaire extérieur (1), l'élément tubulaire intérieur (12) présentant, à l'extrémité supérieure d'entrée de fluide (12a), une pièce de diamètre élargi (13), dont le diamètre extérieur est adapté au diamètre intérieur de l'élément tubulaire extérieur (1), la pièce (13) étant étanchéifiée, en particulier au moyen d'un joint torique (14) disposé dans la pièce (13), pouvant être appliquée ou étant appliquée contre la paroi intérieure (1a) de l'élément tubulaire extérieur (1) et un élément d'impact (14) étant disposé à l'opposé de l'extrémité inférieure ouverte de sortie de fluide (12b) du tube intérieur (12), lequel élément d'impact peut être enveloppé ou est enveloppé par le fluide sortant de l'élément tubulaire intérieur (12),
**caractérisé en ce que** l'élément d'impact (14) est fixé à une certaine distance de l'ouverture inférieure de sortie de fluide (12c) à l'extrémité de sortie de fluide (12b) de l'élément tubulaire intérieur (12) par le biais de nervures (15), au moins l'extrémité de sortie de fluide (12b) de l'élément tubulaire intérieur (12) étant centrée au moyen des nervures (15) dans l'élément tubulaire extérieur (1).

2. Agencement de désaérage selon la revendication 1, **caractérisé en ce que** l'élément d'impact (14) est réalisé sous forme de corps en forme de disque circulaire (14a), qui est disposé dans un plan perpendiculaire à la direction d'écoulement du fluide, en particulier, les nervures (15) étant placées contre la périphérie extérieure du corps (14a) .

3. Agencement de désaérage selon l'une quelconque des revendications précédentes, **caractérisé en ce que** l'élément d'impact (14) présente, sur sa surface tournée vers l'ouverture de sortie de fluide (12c) du tube intérieur (12), une saillie (14b) se rétrécissant dans la direction de l'ouverture de sortie de fluide.

4. Agencement de désaérage selon l'une quelconque des revendications précédentes, **caractérisé en ce que** l'élément tubulaire extérieur (1) présente une butée (16) disposée au niveau de la paroi intérieure (1a), jusqu'à laquelle l'élément tubulaire intérieur (12) peut être enfoncé dans l'élément tubulaire extérieur (1), la pièce (13) de diamètre élargi de l'élément tubulaire intérieur (12) venant en contact avec la butée (16) .

5. Agencement de désaérage selon la revendication 4, **caractérisé en ce que** l'extrémité supérieure de la butée (16) est disposée au-dessus d'une ouverture de désaérage refermable (17) dans la paroi de l'élément tubulaire extérieur (1).

6. Unité structurelle comprenant un agencement de désaérage selon l'une quelconque des revendications précédentes, **caractérisée en ce que** l'unité structurelle est prévue pour être disposée dans un circuit de fluide entre au moins une source de chaleur et un puits de chaleur et comprend des portions de tubes aller et retour (1, 2) disposées parallèlement l'une à l'autre, l'une des portions de tubes, en particulier la portion de tube aller, constituant l'élément tubulaire extérieur (1) de l'agencement de désaérage et une pompe (5) pouvant être montée ou étant disposée sur ou dans l'une des portions de tubes (2), pour refouler un fluide, les portions de tubes aller et retour (1, 2) étant réalisées au moins en partie sous forme de pièce moulée par injection de plastique d'une seule pièce.

7. Unité structurelle selon la revendication 6, **caractérisée en ce que** les portions de tubes aller et retour (1, 2) sont raccordées au moyen d'un élément de liaison (3) réalisé d'une seule pièce avec les deux portions de tubes (1, 2).

8. Unité structurelle selon la revendication 7, **caractérisée en ce que** l'élément de liaison (3) présente une partie plate pourvue de marquages.

9. Unité structurelle selon l'une quelconque des revendications précédentes 6-8, **caractérisée en ce que** la portion de tube retour (2) est réalisée sous forme plus courte que la portion de tube aller (1).

10. Unité structurelle selon l'une quelconque des revendications précédentes 6 à 9, **caractérisée en ce que** des connecteurs de raccordement (4) sont coulés d'une seule pièce au moins dans la région inférieure d'au moins l'une des deux portions de tubes (1, 2) pour le raccordement de composants supplémentaires.

11. Unité structurelle selon l'une quelconque des revendications précédentes 6 à 10, **caractérisée en ce que** des brides (4) pour recevoir par enfichage un système de tubes aller/retour supplémentaire et/ou des adaptateurs en laiton supplémentaires sont coulées d'une seule pièce au moins au niveau d'une extrémité inférieure d'au moins l'une des portions de tubes (1, 2).

12. Unité structurelle selon la revendication 11, **caractérisée en ce que** le collet d'une bride coulée présente au moins un évidement (4a) à travers lequel au moins un élément de fixation est enfoncé perpendiculairement à l'étendue longitudinale d'une portion de tube (1, 2) dans la bride (4) pour la fixation d'un système de tubes supplémentaire enfoncé dans la bride (4).

13. Unité structurelle selon l'une quelconque des revendications précédentes 6 à 12, **caractérisée en ce que** les portions de tubes aller et retour réalisées d'une seule pièce (1, 2) sont fixées à un profilé de support (9).
